# EUROPÄISCHE PATENTSCHRIFT

(11) **EP 4 209 373 B1**
(45) Veröffentlichungstag und Bekanntmachung des Hinweises auf die Patenterteilung: **09.10.2024**
(21) Anmeldenummer: 22207389.2
(22) Anmeldetag: 15.11.2022
(51) Int. Cl.: B60K 11/08, B60R 5/02, B60K 11/04, B60K 1/00

(54) **VORRICHTUNG ZUR REINIGUNG EINER UMGEBUNGSLUFT IN EINEM FAHRZEUG SOWIE FRONTENDMODUL**
DEVICE FOR PURIFYING AN AMBIENT AIR IN A VEHICLE AND FRONT-END MODULE
DISPOSITIF DE PURIFICATION D'AIR AMBIANT DANS UN VÉHICULE ET MODULE FRONTAL

(30) Priorität: 05.01.2022 DE 102022100185
(43) Veröffentlichungstag der Anmeldung: 12.07.2023
(73) Patentinhaber: HBPO GmbH, 59557 Lippstadt (DE)
(72) Erfinder: Schmidt, Ralf, 59302 Oelde (DE); Triebel, Nico, 33100 Paderborn (DE); Friedrich, Jonathan, 58300 Wetter (Ruhr) (DE); Wende, Sven, 33605 Bielefeld (DE)
(74) Vertreter: Ostermann, Thomas

(56) Entgegenhaltungen:
- DE-A1- 102017 008 745
- DE-A1- 102020 001 881
- FR-A1- 3 111 848
- US-B2- 9 687 769

## Beschreibung

Die Erfindung betrifft eine Vorrichtung zur Reinigung einer Umgebungsluft in einem Fahrzeug mit einem Filter zur Filtration der Umgebungsluft, einem Luftführungskanal, mittels dessen die Umgebungsluft von einem Lufteinlass zu dem Filter geführt wird, einem Gepäckraum, der oberhalb zumindest eines Teils des Luftführungskanals angeordnet ist.

Ferner betrifft die Erfindung ein Frontendmodul für Fahrzeuge.

Aus der DE 10 2018 211 583 A1 ist eine Vorrichtung zur Reinigung einer Umgebungsluft in einem Fahrzeug mit einem Filter bekannt, der von einem Motorraum aus in ein Filtereinschubfach einsetzbar ist. Das Filtereinschubfach weist einen horizontal verlaufenden Öffnungsschlitz auf, so dass der Filter schubladenartig eingeschoben werden kann.

Aus der US 9 687 769 B2 ist eine Vorrichtung zur Reinigung zur Umgebungsluft in einem Fahrzeug bekannt, die einen Filter und einen Luftführungskanal umfasst. Der Luftführungskanal verläuft von einem an einer Frontseite des Fahrzeugs angeordneten Lufteinlass unterhalb eines Gepäckraums zu dem Filter, der in Fahrtrichtung des Fahrzeugs hinter dem Gepäckraum aufrechtstehend angeordnet ist. Der Filter ist in einem Gehäuse abgestützt angeordnet. Der Filter kann stoffschlüssig an dem Gehäuse befestigt sein. Alternativ, wenn der Filter während des Lebenszyklus' des Fahrzeugs gewechselt werden muss, ist der Filter lösbar an dem Gehäuse befestigt. Nachteilig an der bekannten Vorrichtung ist, dass ein relativ langer Luftführungskanal vorgesehen sein muss, was den Platzbedarf im Frontbereich des Fahrzeugs erhöht.

Aufgabe der vorliegenden Erfindung ist es daher, eine Vorrichtung zur Reinigung einer Umgebungsluft in einem Fahrzeug sowie ein Frontendmodul derart weiterzubilden, dass Filter in einem Frontbereich des Fahrzeugs platzsparend und handhabungstechnisch einfach platziert werden können, wobei insbesondere die Möglichkeit eines Filterwechsels gegeben ist.

Zur Lösung dieser Aufgabe ist die Erfindung in Verbindung mit dem Oberbegriff des Patentanspruchs 1 dadurch gekennzeichnet, dass der Filter unterhalb des Gepäckraums angeordnet ist und dass eine Halteeinrichtung vorgesehen ist, derart, dass der Filter durch Linearverschiebung verbringbar ist von einer Montagestellung, in der sich der Filter in dem Luftführungskanal befindet, in eine Demontagestellung, in der sich der Filter außerhalb des Luftführungskanals befindet.

Nach der Erfindung ist ein Filter unterhalb eines Gepäckraums angeordnet, so dass der Filter über eine Öffnung in dem Gepäckraum zugänglich ist und bei Bedarf einfach ausgewechselt werden kann. Eine Halteeinrichtung dient zur Fixierung des Filters in einer Montagestellung, in der sich der Filter in dem Luftführungskanal befindet. Darüber hinaus ermöglicht die Halteeinrichtung, dass der Filter lösbar festgelegt ist und über die Öffnung des Gepäckraums zwecks Wechsel desselben aus dem Luftführungskanal in die Demontagestellung verbracht werden kann. Die erfindungsgemäße Halteeinrichtung ermöglicht somit ein einfaches Montieren und Demontieren des Filters über dem Gepäckraum. Vorteilhaft wird eine Zugänglichkeit geschaffen über dem Gepäckraum, der ohnehin zur Aufnahme von Gegenständen vorhanden ist. Eine zusätzliche Zugänglichkeit zu dem Filter im Motorraum braucht daher nicht vorgesehen werden.

Nach einer bevorzugten Ausführungsform der Erfindung weist die Halteeinrichtung einen Halterahmen auf, der kraftschlüssig und/oder formschlüssig oder stoffschlüssig mit dem Boden des Gepäckraums und/oder einer Wandung des Luftführungskanals verbunden ist. Der Halterahmen ermöglicht eine Führung beim Montieren und Demontieren des Filters einerseits und eine sichere Festlegung des Filters in der Montagestellung.

Nach einer Weiterbildung der Erfindung weist der Halterahmen mehrere Rahmenteile auf, die luftdicht an der Wandung des Luftführungskanals anliegen. Auf diese Weise ist sichergestellt, dass die in den Luftführungskanal eingelassene Umgebungsluft vollständig durch den Filter strömen muss.

Nach einer Weiterbildung der Erfindung weist der Halterahmen ein aufrechtes Rahmenteil auf als Führungsschiene. Der Filter kann somit einfach durch vertikale Linearbewegung ein- und ausgeschoben werden.

Nach einer Weiterbildung der Erfindung ist ein unteres Rahmenteil des Halterahmens als ein Anschlag ausgebildet, so dass beim Montieren des Filters einfach die Endstellung des Filters eingenommen werden kann.

Nach einer Weiterbildung der Erfindung weist der Filter eine Filterkassette sowie ein Filterelement auf. Die Filterkassette weist Randseiten auf, die das Filterelement schmalseitig umgeben. Zusätzlich weist die Filterkassette obenseitig ein Griffelement auf, so dass ein manuelles Erfassen des Filters erleichtert wird. Die Filterkassette und das Filterelement bilden eine gemeinsame Baueinheit.

Nach einer Weiterbildung der Erfindung weist der Halterrahmen eine solche Höhe auf, dass eine obere Kante der Filterkassette in der Montagestellung bündig mit einem oberen Rand des oberen Rahmenteils abschließt oder unterhalb des oberen Randes des Rahmenteils angeordnet ist. Auf diese Weise ist sichergestellt, dass der Boden des Gepäckraums keine aus der Ebene des Bodens hinausragende Erhabenheit aufweist, was das Verpacken von Gegenständen einschränken würde.

Nach einer Weiterbildung der Erfindung schließt ein oberer Rand des oberen Rahmenteils des Halterahmens bündig mit einer schlitzförmigen Aussparung des Gepäckraums ab. Auf diese Weise weist der Boden des Gepäckraums nur an einer inneren Seite des Halterahmens eine Kante bzw. einen Sprung auf.

Nach einer Weiterbildung der Erfindung weist der obere Rahmenteil des Halterahmens eine Querausnehmung auf, wodurch eine Verbreiterung des Aufnahmeschlitzes des Halterahmens erzielt wird. Hierdurch wird die Handhabung beim Montieren bzw. Demontieren des Filters verbessert, da mehr Raum zum manuellen Erfassen des Griffelementes vorliegt.

Nach einer Weiterbildung der Erfindung ist die Filterkassette mit Spiel oder klemmend in dem Halterahmen gelagert. Vorteilhaft wird das Eigengewicht des Filters genutzt, um diesen in der Montagestellung zu halten. Vorteilhaft sind keine Ent- bzw. Verriegelungsmittel erforderlich, um den Filter aus der Montagestellung in die Demontagestellung herauszuziehen.

Nach einer Weiterbildung der Erfindung ist das Filterelement als ein Feinstaubpartikelfilterelement ausgebildet, das vorzugsweise dazu ausgelegt ist, verkehrsbedingten Staub infolge von Bremsenabrieb, Reifenabrieb oder Straßenabrieb aus der Umgebungsluft herauszufiltern. Da das Filterelement in einem unteren Bereich des Frontraums des Fahrzeugs angeordnet ist, kann die filtrierte Umgebungsluft zur Unterseite des Fahrzeugs wieder aus dem Luftführungskanal austreten.

Nach einer Weiterbildung der Erfindung ist in Luftströmungsrichtung hinter dem Filter ein Kühlmodul des Fahrzeugs angeordnet, so dass die Umgebungsluft auch zur Kühlung eines Motors des Fahrzeugs genutzt werden kann.

Zur Lösung der Aufgabe ist ein Frontendmodul gemäß Anspruch 16 vorgesehen, mittels dessen auf einfache Weise eine Fahrzeug-Umgebungsluft gereinigt werden kann. Da der Lufteinlass an einer Frontseite des Frontendmoduls und ein Luftauslass an einer Unterseite des Frontendmoduls angeordnet sind, kann auf einfache Weise ein durch Straßenabrieb, Bremsenabrieb und/oder Reifenabrieb erzeugter Feinstaub herausgefiltert werden.

Nach einer Weiterbildung der Erfindung ist in dem Luftführungskanal nicht nur der Filter, sondern auch ein Kühlmodul integriert, so dass derselbe Luftführungskanal zur Zuführung von Umgebungsluft für eine Kühleinrichtung und für eine Fahrzeugumluftreinigung genutzt werden kann. Je nach Öffnungs- /Schließstellung von Lufteinlässen und/oder Luftauslässen kann eine Kühlstellung, eine Filterstellung und eine Aerodynamikstellung eingenommen werden. In der Kühlstellung sind die Verschlusselemente in einer solchen Stellung, dass nur das Kühlmodul von der Umgebungsluft durchströmt wird. Hierdurch kann die Klimatisierungseinrichtung während der Fahrt des Fahrzeugs genutzt werden. In der Filterstellung sind die Verschlusselemente in einer solchen Stellung, dass das Kühlmodul und der Filter durchströmt werden. Diese Stellung erfolgt beispielsweise bei einer Stadtfahrt. Bei der Aerodynamikstellung sind sowohl der Lufteinlass als auch der Luftauslass verschlossen, so dass keine Umgebungsluft durch den Luftführungskanal strömen kann. In dieser Stellung befindet sich das Fahrzeug beispielsweise während einer Landstraßen- oder Autobahnfahrt, bei der zur Minimierung des Energieverbrauchs das Frontendmodul bzw. das Fahrzeug den geringsten Windwiderstand aufweist.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: eine perspektivische Draufsicht auf einen Vorderwagen mit einer geöffneten Motorhaube und mit einem Filter in Montagestellung,
- Fig. 2: eine perspektivische Draufsicht des Vorderwagens gemäß Figur 1 mit einem herausgezogenen Filter in Demontagestellung,
- Fig. 3: eine perspektivische Vorderansicht eines Frontendmoduls des Vorderwagens gemäß Figur 1 mit einem Querträger und einem aufgesetzten Gepäckraum und mit einem Wandungskörper für einen Luftführungskanal sowie einem Lufteinlass,
- Fig. 4: eine perspektivische Draufsicht eines Teils des Frontendmoduls enthaltend den Wandungskörper für den Luftführungskanal sowie den Gepäckraum und den Filter in der Montagestellung,

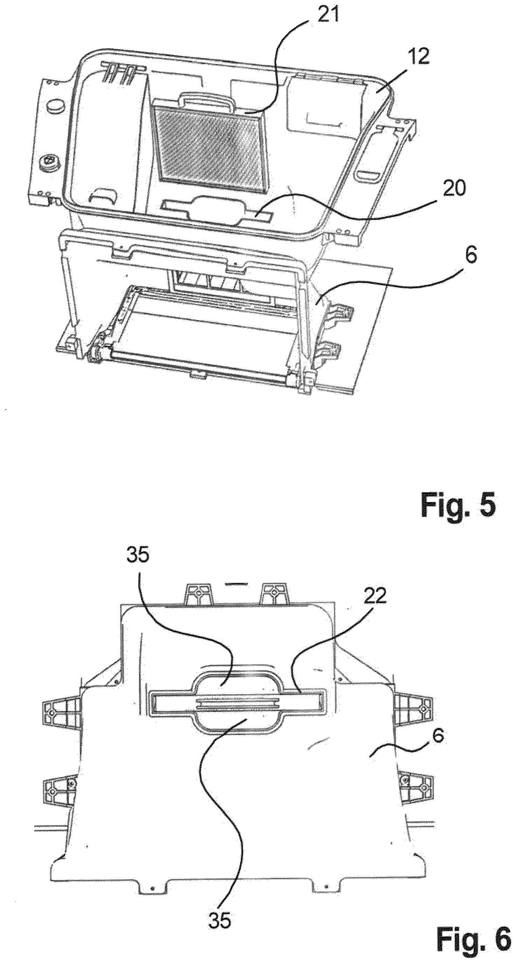

- Fig. 5: eine perspektivische Draufsicht auf die in Figur 4 dargestellte Baueinheit mit den herausgezogenen Filtern in der Demontagestellung,
- Fig. 6: eine Draufsicht auf den Gepäckraum mit dem Filter in der Montagestellung, wobei der Filter in einem Filterrahmen gehalten ist,
- Fig. 7: eine perspektivische Darstellung des Filters,
- Fig. 8: eine Vorderansicht des Filters in der Montagestellung unter klemmender Halterung in dem Filterrahmen,

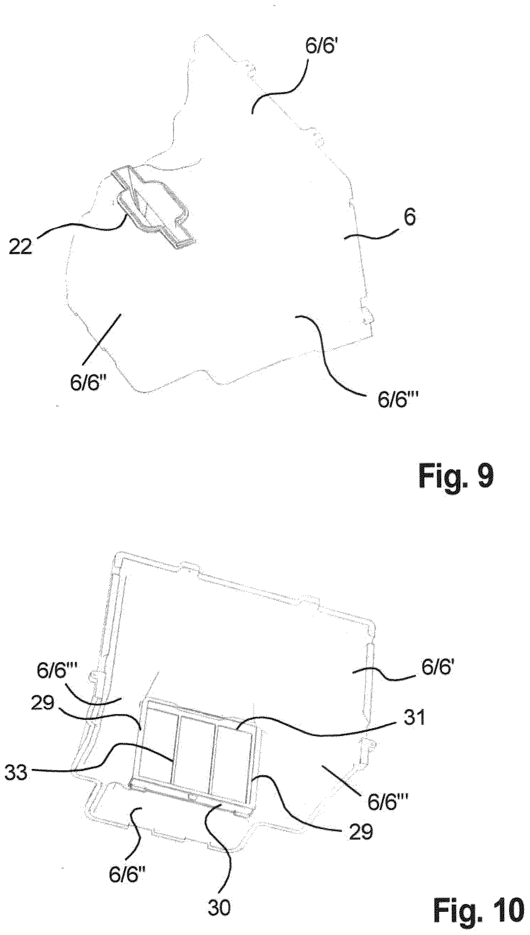

- Fig. 9: eine perspektivische Draufsicht auf den Wandungskörper des Luftführungskanals,
- Fig. 10: eine Untenansicht des Wandungskörpers für den Luftführungskanal, wobei in dem Luftführungskanal der Filterrahmen an dem Wandungskörper montiert angeordnet ist,
- Fig. 11: eine Vorderansicht des Filterrahmens,
- Fig. 12: einen vertikalen Querschnitt durch den Halterahmen und der eingeschobenen Filterkassette (Montagestellung),
- Fig. 13: einen Vertikalschnitt entlang einer Fahrzeuglängsachse durch das Frontendmodul in einer Kühlstellung der Verschlusselemente,
- Fig. 14: einen Vertikalschnitt entlang der Fahrzeuglängsachse durch das Frontendmodul in einer Filterstellung der Verschlusselemente und
- Fig. 15: einen Vertikalschnitt entlang der Fahrzeuglängsachse durch das Frontendmodul in einer Aerodynamikstellung der Verschlusselemente.

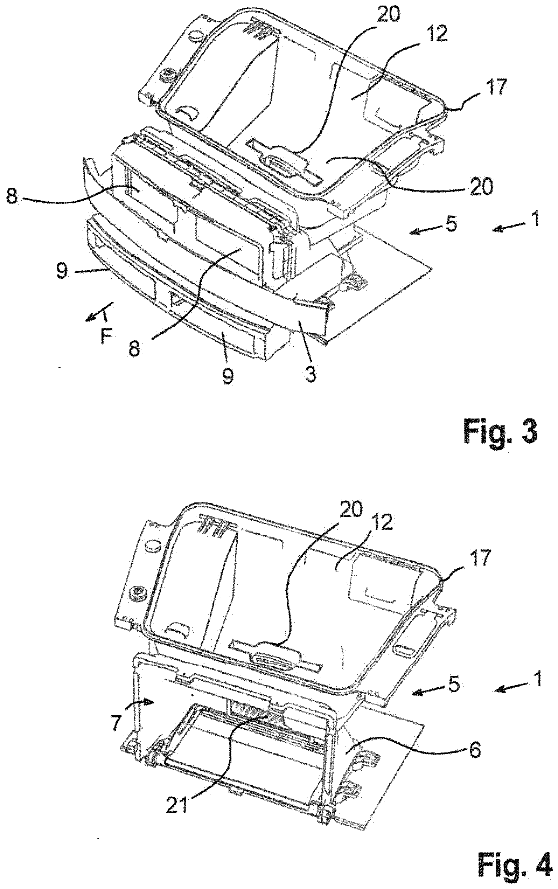

Eine Vorrichtung zur Reinigung einer Umgebungsluft in einem Fahrzeug ist in einem Frontendmodul 1 integriert angeordnet. Das Frontendmodul 1 ist in einem Vorderwagen 2 (Frontbereich eines Fahrzeugs) angeordnet. Das Frontendmodul 1 weist eine sich quer zu einer Fahrzeuglängsachse verlaufenden Montageträger mit einer oberen Querstrebe und einer in Figur 3 dargestellten unteren Querstrebe 3 sowie nicht dargestellte die Querstrebe 3 verbindende Vertikalstreben auf. Die Vertikalstreben sind beabstandet zueinander angeordnet und begrenzen gegenüberliegende Seitenbereiche des Montageträgers. In den Seitenbereichen sind jeweils nicht dargestellte Scheinwerfer angeordnet. An dem Montageträger des Frontendmoduls 1 sind Karosserieteile 4 des Fahrzeugs befestigt.

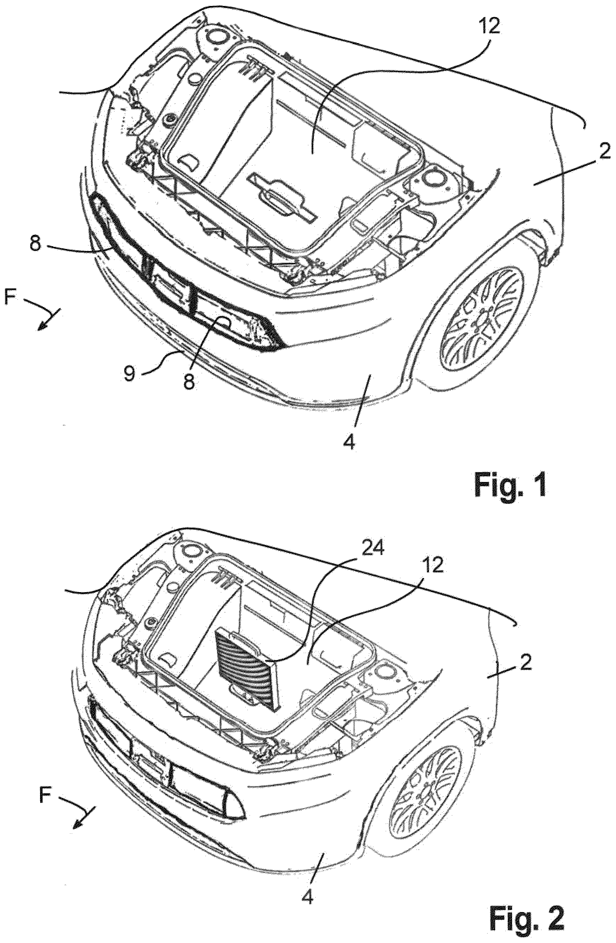

An dem Montageträger bzw. der Querstrebe 3 desselben schließt sich entgegen einer Fahrtrichtung F des Fahrzeugs eine Reinigungsvorrichtung 5 mit einem Wandungskörper 6 zur Begrenzung eines Luftführungskanals 7 an. Wie insbesondere aus den Figuren 1, 3 und 13 ersichtlich ist, befinden sich oberhalb der Querstrebe 3 ein oberer Lufteinlass 8 und unterhalb der Querstrebe 3 ein unterer Lufteinlass 9. An dem oberen Lufteinlass 8 ist ein Verschlusselement 10, beispielsweise eine Jalousie, zum Öffnen und Verschließen des oberen Lufteinlasses 8 angeordnet. An dem unteren Lufteinlass 9 ist ein Verschlusselement 11, beispielsweise eine Jalousie, zum Öffnen und Verschließen des unteren Lufteinlasses 9 angeordnet.

Der Wandungskörper 6 erstreckt sich im Wesentlichen von der Vorderseite des Vorderwagens 2, in dem sich die Lufteinlässe 8, 9 befinden, bis hin in einen Bereich des Vorderwagens 2, der sich unterhalb eines in den Vorderwagen 3 montierten Gepäckraums 12 erstreckt. Der Wandungskörper 6 ist vorzugsweise einstückig aus einem Kunststoffmaterial hergestellt, beispielsweise durch Spritzgießen. Der Wandungskörper 6 ist schalenförmig mit einer oberen Wandung 6', einer unteren Wandung 6" und einer gegenüberliegenden seitlichen Wandung 6‴, die sich - wie die hintere Wandung 6" - in der Montageposition vertikal erstrecken, ausgebildet, wobei eine Vorderseite und eine Unterseite des Wandungskörpers 6 im Wesentlichen frei ausgebildet ist. An der Vorderseite befinden sich die Lufteinlässe 8, 9. An der Unterseite befinden sich Verschlusselemente 13, 14 für einen ersten Luftauslass 15 und einen zweiten Luftauslass 16. Die Verschlusselemente 13, 14 können ebenfalls beispielsweise als Jalousie ausgebildet sein.

Der Gepäckraum 12 umfasst einen muldenförmigen Gepäckraumkörper 17, der an Tragteilen 18 des Frontendmoduls 1 befestigt ist. Ein Boden 19 des Gepäckraumkörpers 17 weist eine schlitzförmige Aussparung 20 auf, durch die ein Filter 21 von einer Demontagestellung oberhalb des Bodens 9 in eine Montagestellung unterhalb des Bodens 19 und vice versa manuell verbracht werden kann. Zu diesem Zweck weist auch der Wandungskörper 6 obenseitig und bündig zu der Aussparung 20 des Gepäckraumkörpers 17 eine schlitzförmige Aussparung 22 auf. In der Montagestellung befindet sich der Filter 21 unterhalb des Gepäckraums 12. Der Wandungskörper 6 ist mit seinen vertikalen Seitenteilen der Form des Filters 21, der plattenförmig und vorzugsweise eine rechteckige oder quadratische Dimension aufweist, angepasst angeordnet, so dass der Filter 21 randseitig desselben luftdicht gelagert ist.

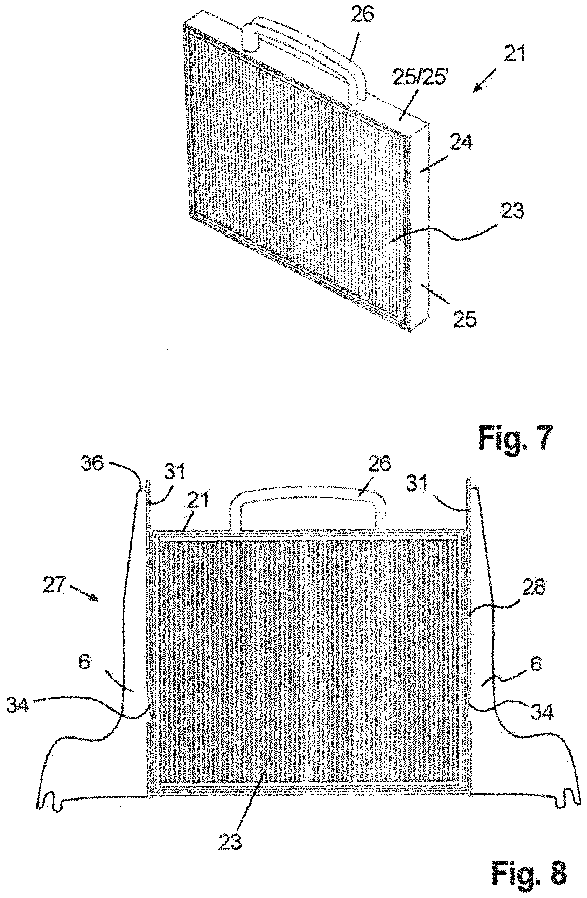

Der in Figur 7 dargestellte Filter 21 besteht aus einem Filterelement 23 und einer das Filterelement 23 umgebenden Filterkassette 24. Die Filterkassette 24 weist Randseiten 25 auf, die Schmalseiten des Filterelementes 23 umfassen. Von einer oberen Randseite 25' der Filterkassette 24 erhebt sich ein Griffelement 26 zum manuellen Erfassen der Filterkassette 24. Das Filterelement 23 ist vorzugsweise nicht lösbar an der Filterkassette 24 befestigt.

Damit der Filter 21 durch Linearverschiebung von der Montagestellung in die Demontagestellung und vice versa verbracht werden kann, ist eine Halteeinrichtung 27 mit einem Halterahmen 28 vorgesehen, der fest mit dem Vorderwagen 2 bzw. dem Wandungskörper 6 und/oder dem Gepäckraum 12 verbunden ist.

Der Halterahmen 28 kann kraftschlüssig und/oder formschlüssig und/oder stoffschlüssig mit dem Wandungskörper 6 verbunden sein. Der Halterahmen 28 ist im Wesentlichen U-förmig ausgebildet mit zwei aufrechten Rahmenteiien 29 und einem unteren Rahmenteil 30, das untere Enden der aufrechten Rahmenteile 29 miteinander verbindet. Während die aufrechten Rahmenteile 29 und das untere Rahmenteil 30 platten- oder leistenförmig ausgebildet sind, weist ein oberes Rahmenteil 31 des Halterahmens 28 einen Aufnahmeschlitz 32 für den Durchtritt des Filters 21 auf.

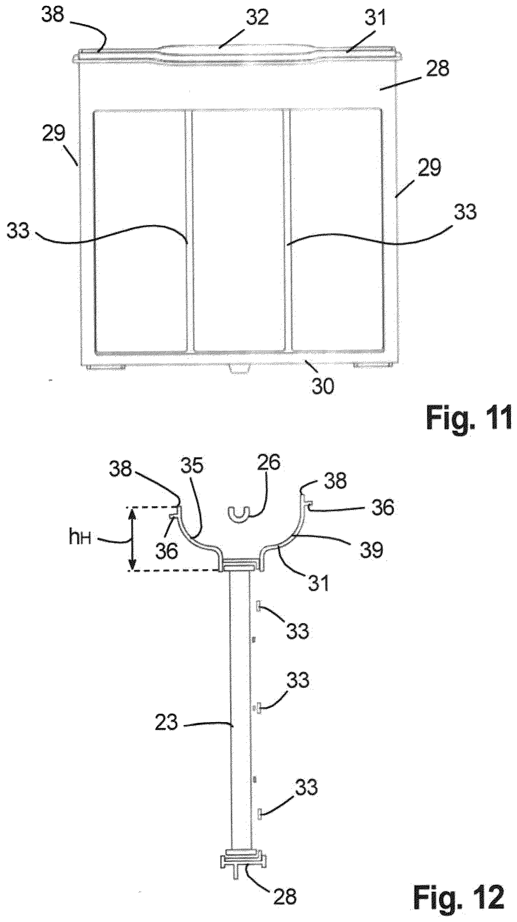

Die aufrechten Rahmenteile 30 bilden eine Führungsschiene beim Einsetzen des Filters 21 in die Montagestellung oder beim Herausziehen aus der Montagestellung. Das untere Rahmenteil 30 des Halterahmens 28 dient als Anschlag beim Einsetzen des Filters 21 in die Montagestellung. Wie aus Figur 11 ersichtlich ist, sind nicht nur die unteren Enden der aufrechten Rahmenteile 29 über das untere Rahmenteil 30 miteinander verbunden, sondern auch obere Enden der aufrechten Rahmenteile 29 sind über das obere Rahmenteil 31 miteinander verbunden.

Zur verbesserten Führung des Filters 21 beim Montieren bzw. Demontieren sind rückseitig des Halterahmens 28 Führungsstreben 33 vorgesehen, die jeweils beabstandet zueinander angeordnet sind und den oberen Rahmenteil 31 mit dem unteren Rahmenteil 30 verbinden. Alternativ oder zusätzlich können die Führungsstreben 33 auch vorderseitig am Halterahmen 28 angeordnet sein. Befinden sich Führungsstreben 33 vorder- und hinterseitig des Halterahmens 28, ist eine Querbewegung des Filters 21 beim Bewegen von der Demontagestellung in die Montagestellung ausgeschlossen.

Wenn die aufrechten Rahmenteile 29 im Querschnitt U-förmig ausgebildet sind, kann auf diese Weise eine Führung des Filters 21 bei der Linearverschiebung verbessert werden.

Wie aus Figur 8 ersichtlich ist, weisen die aufrechten Rahmenteile 29 des Halterahmens 28 Haltelappen 34 auf, die federnd ausgebildet und eine Federspannung in Richtung des Filters 21 erzeugen, so dass der Filter 21 in der Montagestellung klemmend und lagesicher gehalten ist.

Das obere Rahmenteil 31 des Halterahmens 28 weist in einem mittleren Bereich eine Querausnehmung 35 auf, die den Aufnahmeschlitz 32 im Bereich des Griffelementes 26 verbreitert. Das manuelle Erfassen des Griffelementes 26 in der Montagestellung des Filters 21 wird hierdurch erleichtert. Es versteht sich, dass die aufrechten Rahmenteile 29 des Halterahmens 28 luftdicht an dem Wandungskörper 6 anliegen, so dass ein Luftstrom gezwungen ist, durch das Filterelement 23 zu strömen.

Wie aus Figur 12 ersichtlich ist, ist die Querausnehmung 35 Bestandteil einer muldenförmigen Vertiefung 39 des oberen Rahmenteils 31. Sie bildet eine Griffmulde, die das manuelle Erfassen des Griffelementes 26 erleichtert.

Wie aus Figur 12 ersichtlich ist, weist das obere Rahmenteil 31 des Halterahmens 28 eine solche Höhe h_{H} auf, dass das Griffelement 26 des Filters 21 in der Höhe einer oberen Kante 38 des oberen Rahmenteils 31 oder unterhalb desselben abschließt. Das Griffelement 26 ragt somit nicht über die Erstreckungsebene des Bodens 19 des Gepäckraums hinaus.

Das obere Rahmenteil 31 weist einen umlaufenden Kranz 36 auf, über den es auf der Aussparung 22 des Wandungskörpers 6 aufliegt und mit demselben fest verbunden ist.

Das Filterelement 23 ist als ein Feinstaubpartikelfilterelement ausgebildet. Es dient dazu, Staubpartikel, die beispielsweise durch Bremsen-, Reifen- und/oder Straßenabrieb entstehen, aus der Umgebungsluft herauszufiltern. Der vorgesehene Luftführungskanal 7 dient vorzugsweise zusätzlich dazu, einen Wasserkühler 37 eines Kühlmoduls des Fahrzeugs zu durchströmen und zu kühlen. Zu diesem Zweck ist nicht nur der Filter 21, sondern auch der Wasserkühler 37 in dem Luftführungskanal 7 angeordnet und dient somit zur Fahrzeugumluftreinigung. Somit kann die Umgebungsluft dazu genutzt werden, den Elektromotor bzw. die Leistungselektronik des Fahrzeugs zu kühlen.

Der Wasserkühler 37 ist in einem in Fahrtrichtung F des Fahrzeugs vorderen Bereich des Luftführungskanals 7, und zwar in einem Bereich zwischen dem Gepäckraum 12 und den Lufteinlässen 8 und 9 angeordnet. Der Filter 21 ist in einem in Fahrtrichtung F des Fahrzeugs hinteren Bereich des Luftführungskanals 7, und zwar unterhalb des Gepäckraums 12 angeordnet. Der Luftführungskanal 7 erstreckt sich im Wesentlichen in Fahrtrichtung F. Der Umgebungsluftstrom U ist entgegen der Fahrtrichtung F gerichtet. Die Strömungsrichtung des in dem Luftführungskanal 7 geführten Umgebungsluftstroms U verläuft entgegen der Fahrtrichtung F des Fahrzeugs. Der Wasserkühler 37 ist somit in Luftströmungsrichtung hinter dem Filter 21 angeordnet.

Alternativ oder zusätzlich kann der Filter 21 auch in Luftströmungsrichtung vor den Wasserkühler 37 angeordnet sein.

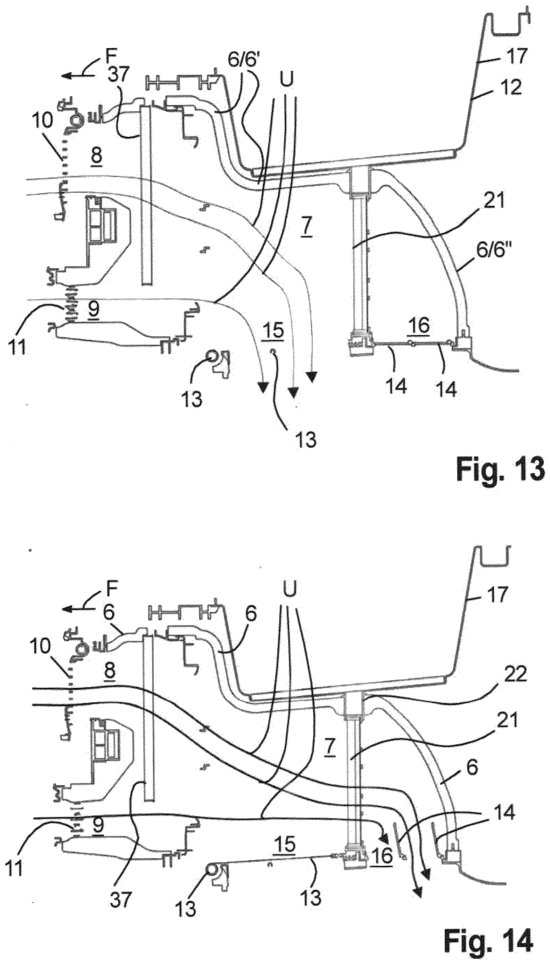

In einer in Figur 13 dargestellten Kühlstellung der Vorrichtung sind die an der Frontseite des Frontendmoduls 1 bzw. des Fahrzeugs angeordneten oberen Verschlusselementes 10 und die unteren Verschlusselemente 11 in einem geöffneten Zustand, so dass durch den oberen Lufteinlass 8 und den unteren Lufteinlass 9 ein Umgebungsluftstrom U in den Luftführungskanal 7 eintreten kann. Der Umgebungsluftstrom U tritt in einem in Fahrtrichtung F gesehen vorderen Bereich des Luftführungskanals 7 ein. Das erste Verschlusselement 13 befindet sich in einem Öffnungszustand, während das zweite Verschlusselement 14 sich in einem Schließzustand befindet. Somit verlässt der eintretende Umgebungsluftstrom U nach zumindest teilweisen Durchtritt durch den Wasserkühler 37 nach unten hin über den ersten Luftauslass 15 das Frontendmodul 1 bzw. das Fahrzeug. Die Vorrichtung nimmt die Kühlstellung ein, wenn eine maximale Kühlung des Elektromotors bzw. der Leistungselektronik erfolgen soll. Mittels einer nicht dargestellten Steuereinrichtung werden die Verschlusselemente 10, 11, 13, 14 entsprechend angesteuert, also in den Öffnungs- oder Schließzustand verbracht.

In einer Filterstellung der Vorrichtung gemäß Figur 14 sind das obere Verschlusselement 10 und das untere Verschlusselement 11 in einer Öffnungsstellung, so dass der Umgebungsluftstrom U durch den oberen Lufteinlass 8 und den unteren Lufteinlass 9 in den Luftführungskanal 7 eintreten kann. Das erste Verschlusselement 13 befindet sich in einer Schließstellung, so dass der erste Luftauslass 15 verschlossen ist. Das zweite Verschlusselement 14 befindet sich in einer Öffnungsstellung, so dass der zweite Luftauslass 16, der sich in Fahrtrichtung F hinter dem ersten Luftauslass 15 sowie hinter dem Filter 21 befindet, offen ist. Der eingetretene Umgebungsluftstrom U wird somit gezwungen, durch den Wasserkühler 37 und den Filter 21 zu strömen, bevor er über den zweiten Luftauslass 16 nach unten austritt. In dieser Filterstellung erfolgt eine Reinigung der Umgebungsluft U. Diese Filterstellung wird mittels der Steuereinrichtung vorzugsweise eingenommen, wenn sich das Fahrzeug in einer Innenstadt befindet oder im stehenden Zustand an einer Ladeeinrichtung angeschlossen ist zur Aufladung eines Akkus des Elektrofahrzeugs.

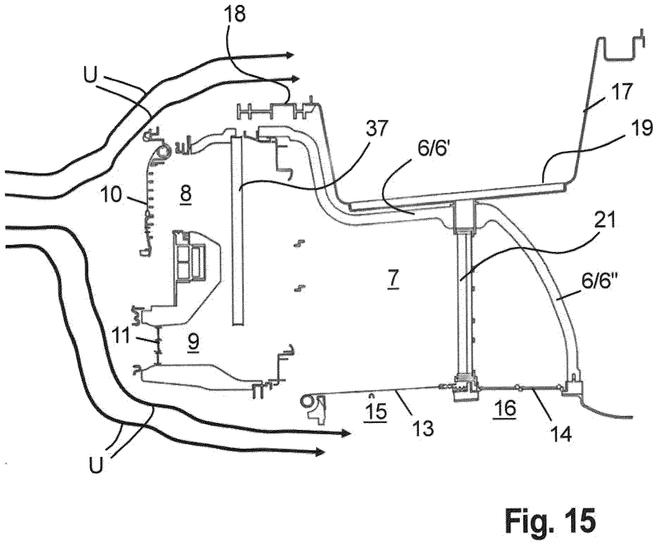

In einer Aerodynamikstellung der Vorrichtung gemäß Figur 15 sind das obere Verschlusselement 10 und das untere Verschlusselement 11 sowie das erste Verschlusselement 13 und das zweite Verschlusselement 14 in einem geschlossenen Zustand, so dass sowohl der obere Lufteinlass 8 und der untere Lufteinlass 9 als auch der erste Luftauslass 15 und der zweite Luftauslass 16 verschlossen sind. Auf diese Weise ist der Umgebungsluftstrom U gezwungen, an dem Luftführungskanal 7 vorbei nach oben oder nach unten zu strömen. In dieser Stellung ist weder der Wasserkühler 37 noch der Filter 21 wirksam. Stattdessen weist das Fahrzeug eine optimale Aerodynamik auf, so dass diese Stellung vorzugsweise bei einer Landstraßen- oder Autobahnfahrt eingestellt wird.

Nach einer nicht dargestellten alternativen Ausführungsform der Erfindung kann der Luftführungskanal 7 von dem Frontende des Fahrzeugs bzw. des Frontendmoduls 1 bis hin zu einem nicht dargestellten Fahrgastraum führen, so dass der Filter 21 zur Verringerung der Feinstaubbelastung im Fahrgastraum dienen kann.

Nach einer alternativen Ausführungsform der Erfindung kann der Luftführungskanal 7 auch kein Kühlmodul enthalten, sondern nur mindestens einen Umgebungsluftfilter 21.

## Patentansprüche

1. Vorrichtung zur Reinigung einer Umgebungsluft (U) in einem Fahrzeug mit
- einem Filter (21) zur Filtration der Umgebungsluft (U),
- einem Luftführungskanal (7), mittels dessen die Umgebungsluft (U) von einem Lufteinlass (8, 9) zu dem Filter (21) geführt wird,
- einem Gepäckraum (12), der oberhalb zumindest eines Teils des Luftführungskanals (7) angeordnet ist,
**dadurch gekennzeichnet, dass** der Filter (21) unterhalb des Gepäckraums (12) angeordnet ist und dass eine Halteeinrichtung (27) vorgesehen ist, derart, dass der Filter (21) durch Linearverschiebung verbringbar ist von einer Montagestellung, in der sich der Filter (21) in dem Luftführungskanal (7) befindet, in eine Demontagestellung, in der sich der Filter (21) außerhalb des Luftführungskanals (7) befindet.

2. Vorrichtung nach Anspruch 1, **dadurch gekennzeichnet, dass** ein Boden (19) des Gepäckraums (12) eine schlitzartige Aussparung (20) aufweist, die an eine Querschnittsdimension des Filters (21) angepasst ausgebildet ist, so dass der Filter (21) durch die schlitzartige Aussparung (20) von der Demontagestellung in die Montagestellung und vice versa verbringbar ist.

3. Vorrichtung nach Anspruch 1 oder 2, **dadurch gekennzeichnet, dass** die Halteeinrichtung (27) einen Halterahmen (28) zur Aufnahme des Filters (21) aufweist, der kraftschlüssig und/oder formschlüssig oder stoffschlüssig mit dem Boden (19) des Gepäckraums (17) und/oder mit einer Wandung (6, 6') des Luftführungskanals (7) verbunden ist.

4. Vorrichtung nach Anspruch 3, **dadurch gekennzeichnet, dass** der Halterahmen (28) mehrere Rahmenteile (29, 30, 31) aufweist, die luftdicht an der Wandung (6, 6‴) des Luftführungskanals (7) anliegen.

5. Vorrichtung nach Anspruch 4, **dadurch gekennzeichnet, dass** ein aufrechtes Rahmenteil (29) des Halterahmens (28) als eine Führungsschiene ausgebildet ist, entlang derer ein Rand des Filters (21) von der Demontagestellung in die Montagestellung und vice versa führbar ist.

6. Vorrichtung nach Anspruch 5, **dadurch gekennzeichnet, dass** sich das aufrechte Rahmenteil (29) des Halterahmens (28) von einem einen Aufnahmeschlitz (32) aufweisenden oberen Rahmenteil (31) zu einem unteren Rahmenteil (30) erstreckt, wobei das untere Rahmenteil (30) als ein Anschlag für den Filter (21) in der Montagestellung desselben dient.

7. Vorrichtung nach Anspruch 6, **dadurch gekennzeichnet, dass** Enden des oberen Rahmenteils (31) und des unteren Rahmenteils (30) jeweils durch die aufrechten Rahmenteile (29) miteinander verbunden sind.

8. Vorrichtung nach einem der Ansprüche 1 bis 7, **dadurch gekennzeichnet, dass** der Filter (21) eine Filterkassette (24) und ein Filterelement (23) umfasst, wobei die Filterkassette (24) Schmalseiten des Filterelementes (23) umfassende Randseiten (25) und ein obenseitiges Griffelement (26) aufweist.

9. Vorrichtung nach Anspruch 8, **dadurch gekennzeichnet, dass** das obere Rahmenteil (31) des Halterahmens (28) eine muldenförmige Vertiefung (39) mit einer solchen Höhe (h_{H}) aufweist, dass das Griffelement (26) der Filterkassette (24) in der Montagestellung in einer Höhe mit einer oberen Kante (38) des oberen Rahmenteils (31) abschließt oder unterhalb der oberen Kante (38) angeordnet ist.

10. Vorrichtung nach Anspruch 9, **dadurch gekennzeichnet, dass** die obere Kante (38) des oberen Rahmenteils (31) bündig mit der schlitzförmigen Aussparung des Bodens (19) abschließt.

11. Vorrichtung nach einem der Ansprüche 1 bis 10, **dadurch gekennzeichnet, dass** das obere Rahmenteil (31) des Halterahmens (28) eine Querausnehmung (35) aufweist zur Verbreiterung des Aufnahmeschlitzes (32).

12. Vorrichtung nach einem der Ansprüche 1 bis 11, **dadurch gekennzeichnet, dass** die Filterkassette (24) mit Spiel oder klemmend in dem Halterahmen (28) gelagert ist.

13. Vorrichtung nach einem der Ansprüche 1 bis 12, **dadurch gekennzeichnet, dass** das Filterelement (23) als ein Feinstaubpartikelfilterelement ausgebildet ist.

14. Vorrichtung nach einem der Ansprüche 1 bis 13, **dadurch gekennzeichnet, dass** der Luftführungskanal (7) durch Wandungen (6', 6', 6‴) eines Wandungskörpers (6) und durch Verschlusselemente (10, 11, 13, 14) zum Öffnen oder Verschließen von Lufteinlässen (8, 9) bzw. Luftauslässen (15, 16) begrenzt ist.

15. Vorrichtung nach einem der Ansprüche 1 bis 14, **dadurch gekennzeichnet, dass** beabstandet zu dem Filter (21) ein Kühlmodul (37) des Fahrzeugs innerhalb des Luftführungskanals (7) angeordnet ist.

16. Frontendmodul für Fahrzeuge mit einer Vorrichtung nach einem der Ansprüche 1 bis 15, wobei der Lufteinlass (8, 9) an einer Frontseite des Frontendmoduls (1) angeordnet ist.

17. Frontendmodul nach Anspruch 16, **dadurch gekennzeichnet, dass**
- in einer Kühlstellung die zum Öffnen und/oder Schließen von Lufteinlässen (8, 9) und Luftauslässen (15, 16) vorgesehenen Verschlusselemente (10, 11, 13, 14) derart angesteuert sind, dass der Lufteinlass (8, 9) offen, ein erster Luftauslass (15) offen und ein zweiter Luftauslass (16) geschlossen ist, so dass der Umgebungsluftstrom (U) durch den Luftführungskanal (7) unter Durchströmung des Kühlmoduls (37) und unter Nichtdurchströmung des Filters (21) geleitet wird,
- in einer Filterstellung die Verschlusselemente (10, 11, 13, 14) derart angesteuert sind, dass der Lufteinlass (8, 9) offen, der erste Luftauslass (15) geschlossen und der zweite Luftauslass (16) offen ist, so dass der Umgebungsluftstrom (U) in den Luftführungskanal (7) eintritt und diesen wieder verlässt unter Durchströmen des Kühlmoduls und des Filters (21) und
- in einer Aerodynamikstellung die Verschlusselemente (10, 11, 13, 14) derart angesteuert sind, dass der Lufteinlass (8, 9) und der Luftauslass (15, 16) verschlossen sind, so dass der Umgebungsluftstrom (U) nicht in den Luftführungskanal (7) eintritt.

## Claims

1. A device for purifying an ambient air (U) in a vehicle, having
- a filter (21) for filtering the ambient air (U),
- an air-guiding duct (7), by means of which the ambient air (U) is guided from an air inlet (8, 9) to the filter (21),
- a trunk (12), which is arranged above at least a part of the air-guiding duct (7),
**characterized in that** the filter (21) is arranged beneath the trunk (12) and **in that** a holding device (27) is provided in such a way that the filter (21) can be brought by a linear displacement from an installation position, in which the filter (21) is located in the air-guiding duct (7), into a dismantling position, in which the filter (21) is located outside of the air-guiding duct (7).

2. The device according to Claim 1, **characterized in that** a bottom (19) of the trunk (12) has a slot-like notch (20) which is configured in an adapted manner to a cross-sectional dimension of the filter (21) so that the filter (21) can be brought from the dismantling position into the installation position and vice versa through the slot-like notch (20).

3. The device according to Claim 1 or 2, **characterized in that** the holding device (27) has a holding frame (20) for receiving the filter (21) which is connected non-positively and/or positively or in a firmly bonded manner to the bottom (19) of the trunk (17) and/or to a wall (6, 6') of the air-guiding duct (7).

4. The device according to Claim 3, **characterized in that** the holding frame (28) has multiple frame parts (29, 30, 31) which lie in an airtight manner in contact with the wall (6, 6‴) of the air-guiding duct (7).

5. The device according to Claim 4, **characterized in that** an upright frame part (29) of the holding frame (28) is configured as a guide rail, along which an edge of the filter (21) can be guided from the dismantling position into the installation position, and vice versa.

6. The device according to Claim 5, **characterized in that** the upright frame part (29) of the holding frame (28) extends from an upper frame part (31) having a receiving slot (32) to a lower frame part (30), wherein the lower frame part (30) serves as a stop for the filter (21) in the installation position of the same.

7. The device according to Claim 6, **characterized in that** ends of the upper frame part (31) and of the lower frame part (30) are in each case connected to one another by the upright frame parts (29).

8. The device according to any one of Claims 1 to 7, **characterized in that** the filter (21) comprises a filter cassette (24) and a filter element (23), wherein the filter cassette (24) has edge sides (25) comprising narrow sides of the filter element (23) and a grip element (26) on the upper side.

9. The device according to Claim 8, **characterized in that** the upper frame part (31) of the holding frame (28) has a trough-shaped cavity (39) with such a height (h_{H}) that the grip element (26) of the filter cassette (24) terminates in the installation position at a height with an upper edge (38) of the upper frame part (31) or is arranged beneath the upper edge (38).

10. The device according to Claim 9, **characterized in that** the upper edge (38) of the upper frame part (31) terminates in a flush manner with the slot-shaped notch of the bottom (19).

11. The device according to any one of Claims 1 to 10, **characterized in that** the upper frame part (31) of the holding frame (28) has a transverse recess (35) for widening the receiving slot (32).

12. The device according to any one of Claims 1 to 11, **characterized in that** the filter cassette (24) is mounted with play or in a clamping manner in the holding frame (28).

13. The device according to any one of Claims 1 to 12, **characterized in that** the filter element (23) is configured as a fine dust particle filter element.

14. The device according to any one of Claims 1 to 13, **characterized in that** the air-guiding duct (7) is delimited by walls (6', 6', 6"') of a wall body (6) and by closure elements (10, 11, 13, 14) for opening or closing air inlets (8, 9) or air outlets (15, 16).

15. The device according to any one of Claims 1 to 14, **characterized in that** a cooling module (37) of the vehicle is arranged at a distance from the filter (21) within the air-guiding duct (7).

16. A front-end module for vehicles, having a device according to any one of Claims 1 to 15, wherein the air inlet (8, 9) is arranged on a front side of the front-end module (1).

17. The front-end module according to Claim 16, **characterized in that**
- in a cooling position, the closure elements (10, 11, 13, 14) provided for opening and/or closing air inlets (8, 9) and air outlets (15, 16) are actuated in such a way that the air inlet (8, 9) is open, a first air outlet (15) is open and a second air outlet (16) is closed so that the ambient air flow (U) is conducted through the air-guiding duct (7), flowing through the cooling module (37) and not flowing through the filter (21),
- in a filter position, the closure elements (10, 11, 13, 14) are actuated in such a way that the air inlet (8, 9) is open, the first air outlet (15) is closed and the second air outlet (16) is open so that the ambient air flow (U) enters the air-guiding duct (7) and leaves this again, flowing through the cooling module and the filter (21), and
- in an aerodynamic position, the closure elements (10, 11, 13, 14) are actuated in such a way that the air inlet (8, 9) and the air outlet (15, 16) are closed so that the ambient air flow (U) does not enter the air-guiding duct (7).

## Revendications

1. Dispositif destiné à purifier d'air ambiant (U) dans un véhicule ayant
- un filtre (21) destiné à filtrer l'air ambiant (U),
- un conduit de guidage d'air (7) au moyen duquel l'air ambiant (U) est guidé depuis une entrée d'air (8, 9) vers le filtre (21),
- un compartiment à bagages (12) qui est disposé au-dessus d'au moins une partie du conduit de guidage d'air (7),
**caractérisé en ce que** le filtre (21) est disposé au-dessous du compartiment à bagages (12) et **en ce qu'**un moyen de retenue (27) est prévu de telle sorte que le filtre (21) peut, par un déplacement linéaire, être amené d'une position de montage, dans laquelle le filtre (21) se trouve dans le conduit de guidage d'air (7), jusque dans une position de démontage, dans laquelle le filtre (21) se trouve à l'extérieur du conduit de guidage d'air (7).

2. Dispositif selon la revendication 1, **caractérisé en ce qu'**un fond (19) du compartiment à bagages (12) présente un évidement en forme de fente (20) qui est conçu de manière adaptée à une dimension en section transversale du filtre (21) de telle sorte que le filtre (21) peut être amené de la position de démontage dans la position de montage et inversement par le biais de l'évidement en forme de fente (20).

3. Dispositif selon la revendication 1 ou 2, **caractérisé en ce que** le moyen de retenue (27) présente un cadre de retenue (28) qui est destiné à recevoir le filtre (21) et est relié par complémentarité de force et/ou de forme et/ou de matière au fond (19) du compartiment à bagage (17) et/ou à une paroi (6, 6') du conduit de guidage d'air (7).

4. Dispositif selon la revendication 3, **caractérisé en ce que** le cadre de retenue (28) présente plusieurs parties de cadre (29, 30, 31) qui sont étanches à l'air au niveau de la paroi (6, 6‴) du conduit de guidage d'air (7).

5. Dispositif selon la revendication 4, **caractérisé en ce qu'**une partie de cadre droite (29) du cadre de retenue (28) est conçue sous la forme d'un rail de guidage le long duquel un bord du filtre (21) peut être guidé de la position de démontage dans la position de montage et inversement.

6. Dispositif selon la revendication 5, **caractérisé en ce que** la partie de cadre droite (29) du cadre de retenue (28) s'étend depuis une partie de cadre supérieure (31) présentant une fente de réception (32) jusqu'à une partie de cadre inférieure (30), la partie de cadre inférieure (30) servant de butée pour le filtre (21) dans la position de montage de celui-ci.

7. Dispositif selon la revendication 6, **caractérisé en ce que** des extrémités de la partie de cadre supérieure (31) et de la partie de cadre inférieur e (30) sont respectivement reliées l'une à l'autre par le biais des parties de cadre droites (29).

8. Dispositif selon l'une quelconque 1 à 7, **caractérisé en ce que** le filtre (21) comprend une cassette de filtre (24) et un élément filtrant (23), où la cassette de filtre (24) présente des bords latéraux (25) comprenant des côtés étroits de l'élément filtrant (23) et un élément de poignée (26) du côté supérieur.

9. Dispositif selon la revendication 8, **caractérisé en ce que** la partie de cadre supérieure (31) du cadre de retenue (28) présente un renfoncement en forme de creux (39) avec une hauteur (h_{H}) telle que l'élément de poignée (26) verrouille la cassette de filtre (24) dans la position de montage à une hauteur avec un bord supérieur (38) de la partie de cadre supérieure (31) ou est disposé au-dessous du bord supérieur (38).

10. Dispositif selon la revendication 9, **caractérisé en ce que** le bord supérieur (38) de la partie de cadre supérieure (31) se verrouille au même niveau que l'évidement en forme de fente du fond (19).

11. Dispositif selon l'une quelconque des revendications 1 à 10, **caractérisé en ce que** la partie de cadre supérieure (31) du cadre de retenue (28) présente un évidement transversal (35) pour l'élargissement de la fente de réception (32).

12. Dispositif selon l'une quelconque 1 à 11, **caractérisé en ce que** la cassette de filtre (24) est montée avec jeu ou de manière serrée dans le cadre de retenue (28).

13. Dispositif selon l'une quelconque 1 à 12, **caractérisé en ce que** l'élément filtrant (23) est conçu sous la forme d'un élément de filtre à particules fines.

14. Dispositif selon l'une quelconque 1 à 13, **caractérisé en ce que** le conduit de guidage d'air (7) est délimité par des parois (6', 6', 6‴) d'un corps de paroi (6) et par des éléments de fermeture (10, 11, 13, 14) pour ouvrir ou fermer des entrées d'air (8, 9) ou des sorties d'air (15, 16).

15. Dispositif selon l'une quelconque 1 à 14, **caractérisé en ce que**, à distance du filtre (21), est disposé un module de refroidissement (37) du véhicule à l'intérieur du conduit de guidage d'air (7).

16. Module frontal pour véhicules ayant un dispositif selon l'une quelconque des revendications 1 à 15, où l'entrée d'air (8, 9) est disposée au niveau d'un côté avant du module frontal (1).

17. Module frontal selon la revendication 16, **caractérisé en ce que**,
- dans une position de refroidissement, les éléments de fermeture (10, 11, 13, 14) prévus pour ouvrir et/ou fermer des entrées d'air (8, 9) et des sorties d'air (15, 16) sont actionnés de telle sorte que l'entrée d'air (8, 9) soit ouverte, une première sortie d'air (15) soit ouverte et une seconde sortie d'air (16) soit fermée de telle sorte que le courant d'air ambiant (U) soit dirigé à travers le conduit de guidage d'air (7) en traversant le module de refroidissement (37) et en ne traversant pas le filtre (21),
- dans une position de filtre, les éléments de fermeture (10, 11, 13, 14) sont actionnés de telle sorte que l'entrée d'air (8, 9) soit ouverte, la première sortie d'air (15) soit fermée et la seconde sortie d'air (16) soit ouverte de telle sorte que le courant d'air ambiant (U) entre dans le conduit de guidage d'air (7) et ressort de celui-ci en traversant le module de refroidissement et le filtre (21) et
- dans une position aérodynamique, les éléments de fermeture (10, 11, 13, 14) sont actionnés de telle sorte que l'entrée d'air (8, 9) et la sortie d'air (15, 16) soient fermées de telle sorte que le courant d'air ambiant (U) n'entre pas dans le conduit de guidage d'air (7).
